(19) Europäisches Patentamt
European Patent Office
Office européen des brevets

(11) **EP 3 913 573 B1**

(12) **EUROPEAN PATENT SPECIFICATION**

(45) Date of publication and mention
of the grant of the patent:
**08.11.2023 Bulletin 2023/45**

(21) Application number: **20176101.2**

(22) Date of filing: **22.05.2020**

(51) International Patent Classification (IPC):
**G06T 5/00** *(2006.01)* **G06T 5/40** *(2006.01)*

(52) Cooperative Patent Classification (CPC):
**G06T 5/009; G06T 5/40;** G06T 2207/20016;
G06T 2207/20208

(54) **METHOD FOR IMAGE PROCESSING, IMAGE SIGNAL PROCESSOR IN A TERMINAL DEVICE**

VERFAHREN ZUR BILDVERARBEITUNG, BILDSIGNALPROZESSOR IN EINEM ENDGERÄT

PROCÉDÉ DE TRAITEMENT D'IMAGE, PROCESSEUR DE SIGNAL D'IMAGE DANS UN DISPOSITIF DE TERMINAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.11.2021 Bulletin 2021/47**

(73) Proprietor: **Beijing Xiaomi Mobile Software Co., Ltd.**
**Beijing 100085 (CN)**

(72) Inventors:
• **Tuna, Uygar**
 **33720 TAMPERE (FI)**
• **Birinci, Murat**
 **33720 TAMPERE (FI)**

• **Kyrönlahti, Petteri**
 **33720 TAMPERE (FI)**
• **Finnilä, Tapio**
 **33720 TAMPERE (FI)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**US-A1- 2004 101 207 US-A1- 2010 142 790**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method for image processing, in particular to a tone mapping process of an image, an image signal processor (ISP) to carry out the method and a terminal comprising such an ISP.

Today's digital cameras and image sensors can only capture a limited range of the dynamic range that exists in real life. Furthermore, the viewing environment, such as a mobile device display, a computer display, TVs etc., for the captured image may support an even more narrow dynamic range than what the digital cameras and image sensors can capture.

To mitigate this problem a tone mapping process is applied to the captured image data. Tone mapping is a process of mapping the image pixels representing relatively high dynamic range to a viewing environment, i.e. displaying media, with relatively lower dynamic range. While doing this, tone mapping process is responsible to provide images to be represented as close as possible to the real-world scene. Therein tone mapping is one of the crucial blocks of the image processing between capturing of the image data towards the final image presented to the viewer which is responsible for altering the image contrast and brightness in order to successfully transform/map the original high dynamic range of the real-world to an image being displayed on a lower dynamic range displays.

Among other, pyramid-based tone mapping algorithms are well known to enhance the dynamic range of images and are described for example in US 2004/101207 and US 2010/142790. Therefore, the image data is deconstructed into a plurality of N levels or layers. The first level, in a Gaussian-pyramid algorithm for example, is a Gaussian-filtered image of the initial image data with a reduced resolution. The second level is a Gaussian-filtered image of the first level with reduced resolution with respect to the first level and so on up to the top level. Other filters, such as a Laplacian-filter, can be used instead of the Gaussian-filter for deconstructing the initial image data into the plurality of levels. Subsequently, the contrast of one or more levels is adapted accordingly and afterwards the levels are collapsed to form the final image with an enhanced dynamic range beginning with the top level. However, due to the limited dynamic range of the digital imaging sensors and the image viewing media, i.e. displays, the scene is usually underexposed in order to avoid burning/saturating the highlights with the cost of underexposed dark shadow regions. Thus, the known mapping algorithms deliver unacceptable results of the final image with a loss of details and insufficient dynamic range.

It is an object of the present invention to provide an image processing method, in particular a tone-mapping method to improve the dynamic range of a final image.

The above given problem is solved by the method for image processing of claim 1, the image signal processor (ISP) of claim 14 and the terminal device of claim 15.

The method for image processing, in particular image tone-mapping algorithm in accordance to the present invention comprises the steps of:

Acquiring initial image data, preferably from an image sensor;
Deconstructing the image data in a plurality of N image pyramid layers;
Collapsing the (k=N)-layer, i.e. the top layer, with the (k=N-1)-layer in order to create an intermediate layer, wherein $k = N, ...,1$;
Collapsing the intermediate pyramid layer with the subsequent layer to create a new intermediate layer and repeating this step until collapsing the last intermediate layer with the first (k=1)-layer to generate the final image. Therein, the (k=N)-layer is also denoted as top layer and the (k=1)-layer is denoted as bottom layer. Collapsing starts with the top layer (k=N)-layer being collapsed with the subsequent (k=N-1)-layer. By collapsing these layers an intermediate layer is created. This intermediate layer is a starting point of the next collapsing step with the subsequent (k=N-2)-layer in order to create a new intermediate layer which is the starting layer of the next collapsing step and so on. This procedure is continued until the (k=1)-layer, i.e. the bottom layer, is reached. In this step the latest intermediate layer is collapsed with the bottom layer (k=1)-layer in order to generate the final image. Therein, N is an integer lager than 2.

In accordance to the present invention a tone-mapping operator is applied to at least one of the intermediate layers. Thus, the tone of at least one intermediate layer generated by the above-referenced steps of collapsing the N image pyramid layers is changed or manipulated. By applying the tone-mapping operator to the intermediate layer, appearance of the final image can be tailored in an intuitive and user pleasing way in the final image by impacting the desired tones (bright, mid-tones or shadows) of the initial image data. Thus, by the tone-mapping operator of the present invention shadow regions can be brightened up, dark objects in the relatively bright areas may remain untouched without producing artifact nor loss of contrast.

Preferably, the tone-mapping operator is applied to at least two or more intermediate layers and even more preferably to each of the intermediate layers. Thus, the tone-mapping is distributed over the intermediate layers in order to achieve the desired result. Therein, the tone-mapping can be distributed according to a control algorithm which may analyze the content of the image via image statistics such as histogram of the image or can perform AI-based image classification/analysis.

Preferably, the tone-mapping operator is applied to the initial image data and/or to the final image for further adapting the appearance of the final image. Additionally or alternatively, the tone-mapping operator is applied to the top layer, i.e. the (k=N)-layer.

Preferably, a contrast manipulation is applied to at least one, preferably more than one and more preferably to each of the plurality of N image pyramid layers. Additionally or alternatively, a contrast manipulation is applied to at least one, preferably more than one and more preferably to each of the intermediate layers. Thus, by applying a contrast manipulation to the at least one image pyramid layer or intermediate layer contrast of the final image can be manipulated and/or the dynamic range of the final image can be further enhanced.

Preferably, the tone-mapping operator is applied locally to sub-areas of the respective intermediate layer. Therein, sub-areas of the image data are areas smaller than the area of the complete image. In particular, the tone-mapping operator is applied to more than one sub-area of one of the respective intermediate layer. Alternatively, the tone-mapping operator is applied globally to the complete respective intermediate layer. Thus, local or global tone-mapping is feasible in order to specifically control the result of the final image. Therein, it is possible to apply a local tone-mapping to one or more of the intermediate layers while a global tone-mapping is applied to at least one or more other intermediate layer. Thus, local tone-mapping and global tone-mapping can be freely selected and applied to different intermediate layers.

Preferably, the contrast manipulation is applied locally to sub-areas of the image pyramid layer and/or intermediate layer. Therein, sub-areas of the image pyramid layer and/or intermediate layer are areas smaller than the area of the complete image pyramid layer and/or intermediate layer. In particular, the contrast manipulation is applied to more than one sub-area of the respective image pyramid layer and/or intermediate layer. Alternatively, the contrast manipulation is applied globally to the complete respective image pyramid layer and/or intermediate layer. Thus, local or global contrast manipulation is feasible in order to specifically control the result of the final image. Therein, it is possible to apply a local contrast manipulation to one or more of the intermediate layers and/or one or more of the image pyramid layers while a global contrast manipulation is applied to at least one or more other intermediate layer and/or image pyramid layer. Thus, local contrast manipulation and global contrast manipulation can be freely selected and applied to different intermediate layers and/or image pyramid layers preferably in addition to the above-mentioned brightness manipulation.

Preferably, a tone-mapping operator is in addition applied to the final image. Additionally or alternatively, tone-mapping operator is applied to the initial image data.

Preferably, a contrast manipulation is in addition applied to the final image. Additionally or alternatively, contrast manipulation is applied to the initial image data. Additionally or alternatively, contrast manipulation is applied to the top layer, i.e. the k=N-layer.

Preferably, collapsing is performed by

$$Img_k(i,j) = L_k(i,j),$$

where $k$ = Top_level
with $k = N - 1, ..., 1$ and

$$Img_k(i,j) = \mathrm{Upscale}\big(Img_{k+1}(i,j)\big) + L_k(i,j)$$

for the N-layer.

Therein, $L_k(i,j)$ being the image pyramid layer of the k-layer, UPSCALE is a resolution adaption function between the k+1-layer and the k-layer and $IMG_k(i,j)$ being the respective intermediate layer and $IMG_{k=1}$ being the final image. Therein, $i, j$ describe the position of the respective pixel in the image.

Preferably, tone-mapping is applied by

$$Img_k(i,j) = \mathrm{ToneMapping}\big(Img_k(i,j)\big)$$

if the tone-mapping is applied to one of the intermediate layers $IMG_k$. If the tone-mapping is applied directly to one of the image pyramid layer $L_k(i,j)$ then the tone-mapping is applied according to $L_k(i,j)$ = ToneMapping($L_k(i,j)$).

Preferably, the image data is deconstructed into a Laplacian-Pyramid. Therein, for a Laplacian-Pyramid preferably the k=1-layer is a Laplacian-filtered image with reduced resolution of the initial image data and the subsequent layers up to the top layer are Laplacian-filtered images of the respective previous layer with reduced resolution. Of course, different filters can be used for deconstructing the initial image data into a respective image pyramid. In particular, different filters can be used during deconstruction the initial image data combinedly.

Preferably, image is deconstructed into a plurality of image pyramid layers, where the top layer, i.e. the (k=N)-layer in the pyramid is a low-resolution representation of the original image while the other layers beneath are carrying edge information. Some examples are Laplacian and Wavelet transformation based pyramids Preferably, the tone-mapping operator is implemented as brightness manipulation.

Preferably, brightness manipulation is implemented as one of a functional relationship given by a predefined function such as a Gamma function, such as given by $out = in^{Gamma}$ (also known as Gamma correction) or a contrast enhancing sigmoid function, for example given by $out = \frac{1}{1+\exp(p-(2\times p)\times in)}$ with $p$ are given/preset parameter. Therein, "in" describes the input pixel and "out" the output pixel of the respective functional relationship.

Preferably, the applied tone-mapping operator and in particular the applied brightness manipulation is determined in dependence on one or more parameters of a scene content such as high/low contrast scene, portrait or landscape scene, indoor scene, light sources, moving objects and so on. Thus, the tone-mapping operator or the brightness manipulation can specifically tailored to the demands of the user and/or the given circumstances in order to achieve the desired result of the final image.

Preferably, the applied tone-mapping operator and in particular the applied brightness manipulation is determined in dependence on one or more parameters of ambience properties, such as low/high dynamic range, low/high lux, total gain of the image sensor, noise of the image, histogram of brightness, and user preference. Thus, the tone-mapping operator or the brightness manipulation can specifically tailored to the demands of the user and/or the given circumstances in order to achieve the desired result of the final image.

Preferably, the brightness manipulation is implemented as Look-up-Table (LUT). Therein, the Look-up-Table can be either predefined as functional relationship or can be generated in dependence on one or more of a scene content, ambience properties, total gain of the image sensor, noise of the image sensor, histogram of brightness, and user preferences. Thus, by the Look-up-Table a fast way is provided in order to apply the brightness manipulation to the respective intermediate layer or the respective image pyramid layer.

Preferably, the total tone-mapping and in particular the total brightness manipulation between the initial image data in the final image is distributed between the tone-mapping to one or more intermediate layer. Thus, the total tone-mapping and in particular the total brightness manipulation can be distributed between at least two intermediate layers. Therein, in particular the total tone-mapping and in particular the total brightness manipulation may be evenly distributed such that to each intermediate layer the same tone-mapping/brightness manipulation is applied. Alternatively, at least two tone-mappings or brightness manipulations are unequal and thus the total brightness manipulation is unevenly distributed to meet further demands and provide a higher degree of freedom to achieve the desired result of the final image. Therein, the distribution can be determined on the scene content, such as overall brightness of the initial image data. Preferably, for a brighter image the brightness manipulation might be evenly distributed while for a dark image the brightness manipulation might be unevenly distributed among the different intermediate layers. Therein, the total tone-mapping can be distributed according to a control algorithm which may analyze the content of the image via image statistics such as histogram of the image or can perform AI-based image classification/analysis. Furthermore, for the brightness manipulation having the capability to distribute the LUTs over the layers will enable capability no only to decide whether to modify bright, mid-tones, or shadows, but it will also enable to control those, and the locality of the aforementioned traits based on image analysis. For example, if image content analysis based decision suggest that small details in shadows should be suppressed, but bigger details enhanced, that will be possible with the proposed solution.

Further, it is an object of the present invention to provide an image signal processor (ISP) configured to carry out the steps of the method described above.

Further, it is an object of the present invention to provide a terminal device comprising an ISP configured to carry out the steps of the method as previously described and an image sensor connected to the ISP to acquire the image data and providing the image data to the ISP for further processing.

The invention is further described with reference to the accompanied figures. The figures show:

Fig. 1          an example of a Pyramid based tone-mapping process,

Fig. 2          a first embodiment according to the present invention,

Fig. 3          a second embodiment according to the present invention,

Fig. 4          determination of a Look-Up-Table according to the present invention,

Fig. 5                    distribution of the brightness manipulation according to the present invention,

Figs. 6A - 6C    comparison of the results according to the present invention,

Fig. 7                    detailed analysis of the comparison of Figs. 6A to 6C,

Fig. 8A - 8C    examples of the final image according to the present invention, and

Fig. 9                    a device according to an embodiment of the present invention.

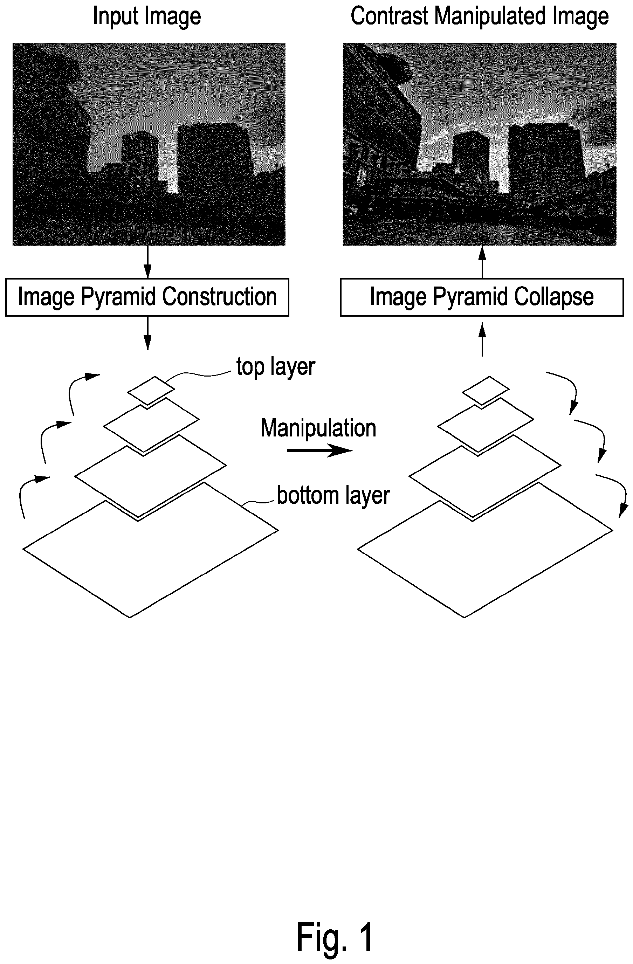

Figure 1 shows an example of a Pyramid based tone-mapping process which might be implemented as Laplacian-Pyramid based tone-mapping process starting with an input image as initial image data preferably from an image sensor. This image data is deconstructed into an image pyramid with a plurality of N image pyramid layers.

In the example given of Figure 1 is N=4 wherein for the Laplacian-Pyramid based image pyramid a Laplacian-filter is applied to the initial image data of the input image for k=1, i.e. the bottom layer. Subsequently, a Laplacian-filter is applied to the bottom layer in combination with a down-sampling step to generate the next image pyramid layer k=2. This step is further carried out until the top level with k=N is reached. Therein, the number N may depend on the resolution of the input image or might be selected in dependence on other parameters, such as computational capacity or the like. Afterwards the Laplacian image pyramid is collapsed starting with the top level, level by level down to the bottom level wherein during the process of collapsing a brightness manipulation is applied to intermediate levels generated during the collapsing process. When all layers of the Laplacian image pyramid are collapsed the final image is generated comprising an improved dynamic range wherein shadow regions are brightened up, dark objects in the relatively bright area remain untouched without degrading of the contrast in the image.

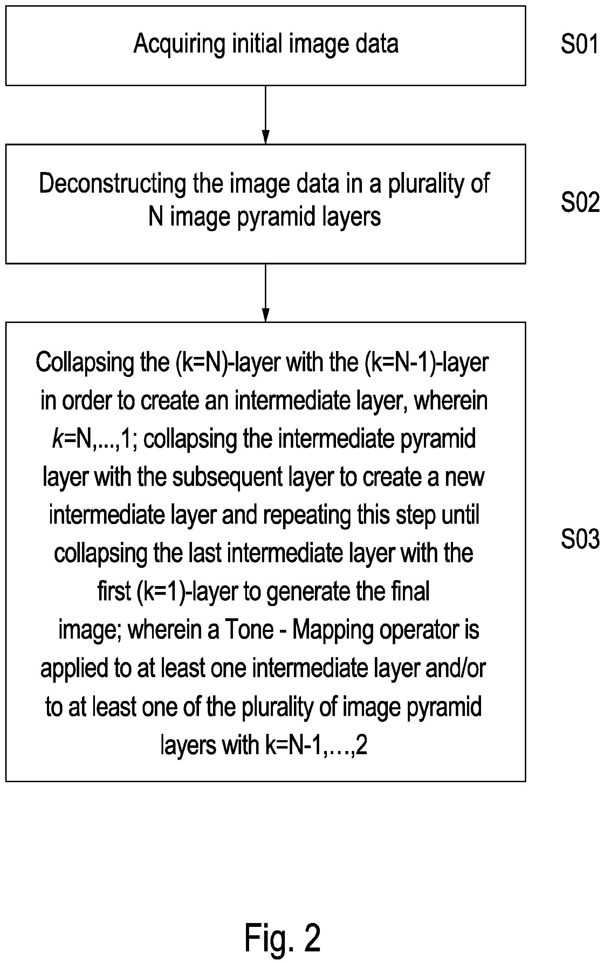

Figure 2 shows a schematic representation of the method of the present invention with the first step S01 of acquiring initial image data preferably from an image sensor;

in step S02 the initial image data is deconstructed into a plurality of N image pyramid layers; and
in step S03 first the k=N layer is collapsed with the k=N-1 layer in order to create an intermediate layer. Subsequently, the intermediate layer is collapsed with the subsequent layer with k=N-2 to create a new intermediate layer and repeating this step for k=N, ...,1 until collapsing the last intermediate layer with the k=1 layer to generate the final image wherein a tone-mapping operator is applied to at least one intermediate layer.

The collapse of the Laplacian-Pyramid is described by

$$Img_k(i,j) = \text{Upscale}\big(Img_{k+1}(i,j)\big) + L_k(i,j)$$

with $k = N$-1, ...,1

$$Img_k(i,j) = L_k(i,j),$$

where $k$ = N, i.e. the top layer.

Therein, $L_k(i,j)$ being the preferably the Laplacian image pyramid layer of the k-layer, UPSCALE is a resolution adaption function between the k+1-layer and the k-layer, $IMG_k$ with k=N, ...,1 being respective intermediate layer, wherein $IMG_{k=1}$ being the final image. Further, $i,j$ denote the pixel indices of the respective images.

During the image pyramid collapse, after collapsing a certain level and generating the respective intermediate layer, tone-mapping of the intermediate level is applied before collapse with the next level is continued. This additional step is provided by

$$Img_k(i,j) = \text{ToneMapping}\big(Img_k(i,j)\big).$$

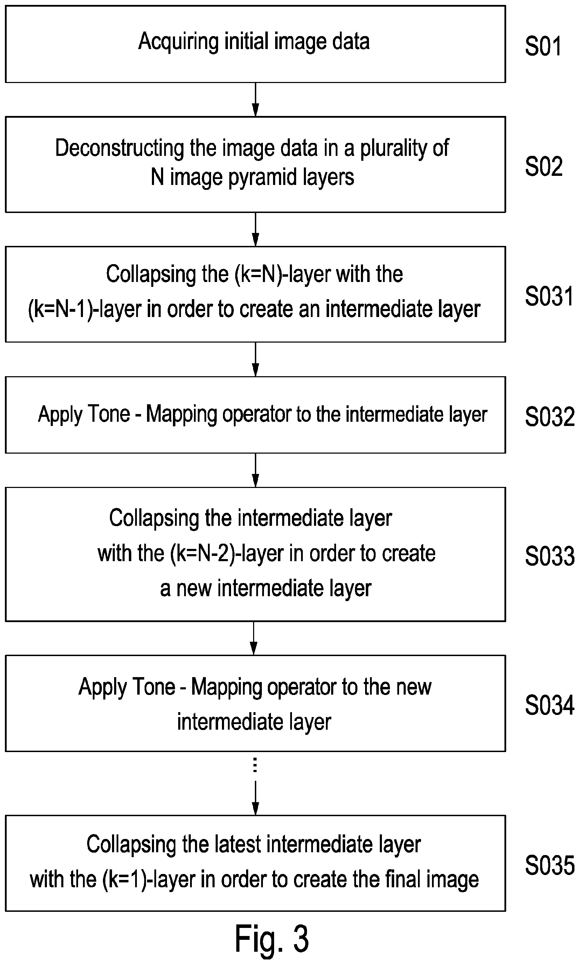

Therein, the tone-mapping operator can be applied only to one of the intermediate layers. Preferably, the tone-mapping operator is applied to more than one intermediate layer and preferably to each of the intermediate layers. In this case, before collapse of an image pyramid layers with the previous intermediate layer a tone-mapping operator is applied to the intermediate layer. This situation is schematically depicted in Figure 3 wherein in step S031 the (k=N)-layer is collapsed with the (k=N-1)-layer to create an intermediate layer. In step S032 a first tone-mapping operator is applied to the intermediate layer. Afterwards, the manipulated intermediate layer is collapsed with the (k=N-2)-layer in step S033 in order to create a new intermediate layer. In step S034 a further tone-mapping operator is applied to the new intermediate layer before collapsing the new intermediate layer with the next image layer. These steps are repeated until the bottom layer with k=1 is reached as final image. Thus, after each step of creating a new intermediate layer by collapsing the previous intermediate layer with the respective pyramid image layer a tone-mapping operator is applied to this intermediate layer.

Therein, the tone-mapping operator might be implemented as a brightness manipulation. The brightness manipulation might be provided as one of a functional relationship, a Gamma-function (also known as Gamma-correction) or a contrast enhancing sigmoid function.

Preferably, the brightness manipulation is provided as Look-up-Table (LUT).

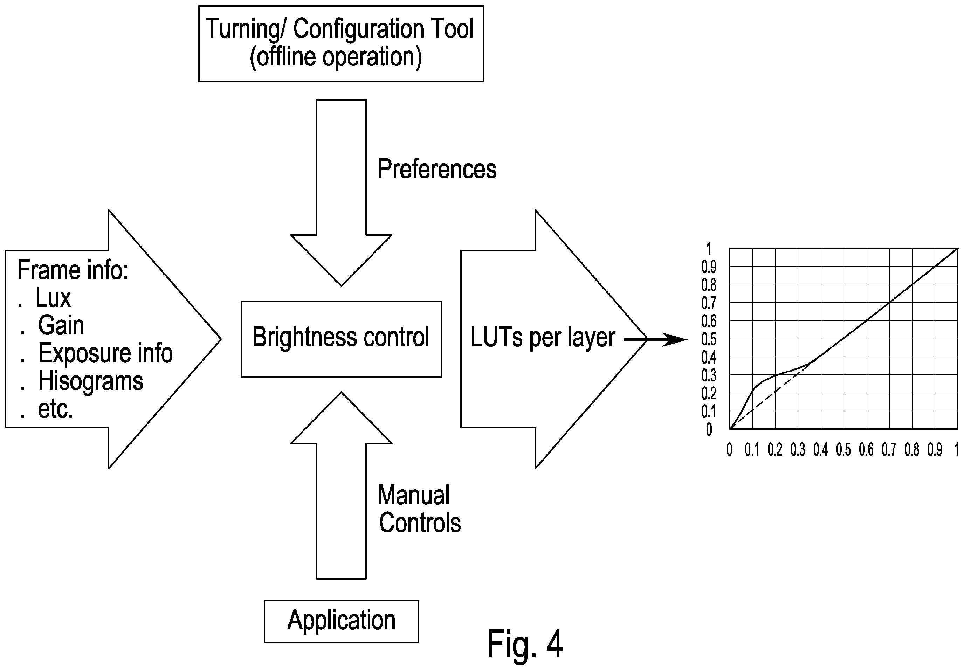

As depicted in Figure 4 the brightness manipulation can be provided by a brightness control which is configured to generate LUTs for each layer to be applied to individually. Therein, the brightness control might consider user preferences or manual controls of the application, tuning/configuration parameters as well as frame information such as lux, gain, exposure info, histograms etc. From this information together the brightness control generates the LUTs applied to the individual layers. However, the present invention is not limited to a specific LUT or brightness manipulation.

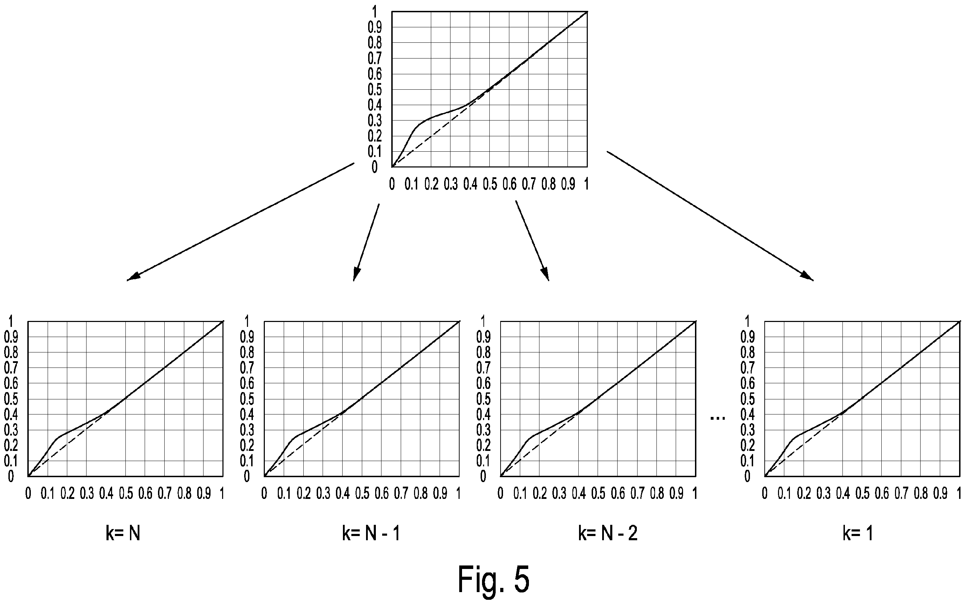

The overall or total brightness manipulation applied to the image to achieve the desired result can be distributed among the different layers. This is shown in Figure 5. In the top of Figure 5 the total brightness manipulation to be applied to the image is depicted as an example. Different LUTs can be implemented as described above. This total brightness manipulation is distributed among brightness manipulation of the one or more intermediate layers. Therein, the total brightness manipulation can be evenly distributed among the different layers. Alternatively, the total brightness manipulation can be applied differently to different intermediate layers. In this case the LUT for the different layers are different.

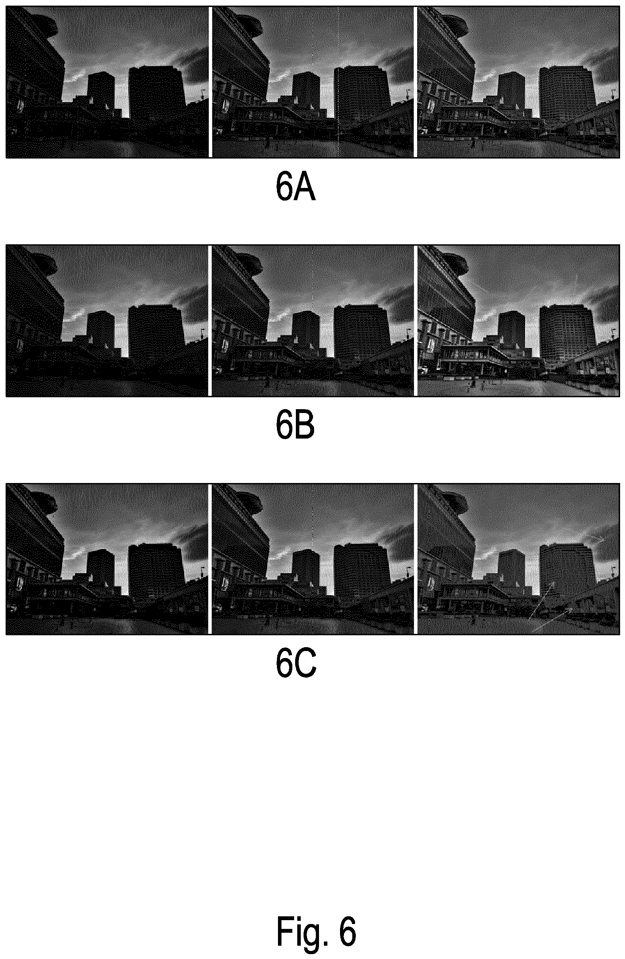

Figure 6A shows and example of the method according to the present invention enhancing the shadow regions from left to right gradually using a brightness manipulation distributed among the intermediate layers applied during the image pyramid collapse. Therein, the contrast of the image is preserved and only the shadow regions are brightened up enhancing the dynamic range and providing a user pleasing representation of the real scene.

As comparison, Figure 6B shows enhancement of shadow regions from left to right gradually using a brightness manipulation applied only to the top layer of the Laplacian-Pyramid resulting in an uneven distribution of brightness and artifacts i.e. underexposed areas. Similarly, in Figure 6C shows an enhancement of the shadow regions from left to right gradually using brightness manipulation only to the final image after complete pyramid collapse, brighten up the image without enhancing the dynamic range of the image.

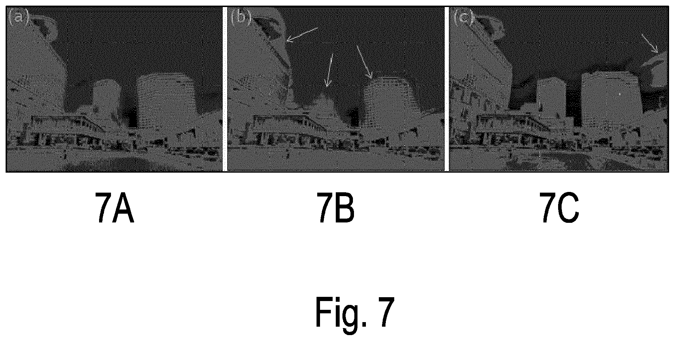

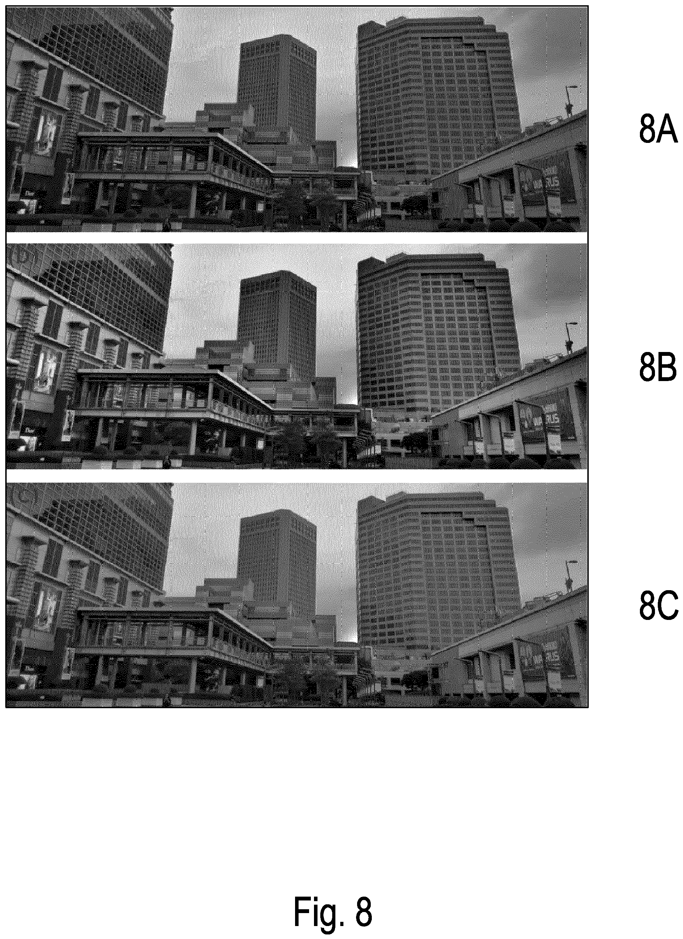

Figure 7A shows a ratio image between the middle image (mid-bright) and the right image (brightest) of Figure 6A. Therein the grey regions show the pixel with large differences compared to the original image with the dark pixels are marginally affected. Similar, Fig 7B shows a ratio image between the middle image (mid-bright) and the right image (brightest) of Figure 6B and Fig 7C shows a ratio image between the middle image (mid-bright) and the right image (brightest) of Figure 6C. As can be seen from this comparison that with the method in accordance to the present invention by applying brightness manipulation to the intermediate layers during collapsing bright/shadow regions are well separated and thus, the brightness manipulation only influences dark regions while brighter regions are remain unchanged, preserving contrast. As shown in Fig. 7A, the present invention overperforms the other alternatives shown in Figures 6B, 6C and 7B, 7C, respectively. As visible in Fig. 7B und 7C underexposed areas appear and a loss of contrast. Figures 8A, 8B and 8C showing the final image according to the method as described with respect to the Figures 6A, 6B and 6C, respectively. Figures 8A showing the result of the present invention having a high dynamic range without loss of contrast and evenly distributed brightness without loss of details or underexposed areas in the image. Figure 8B and Figure 8C suffer from dark halos or contrast deterioration while the method of the present invention shown in Figure 8A is able to manipulate brightness without producing artifacts nor loss of contrast.

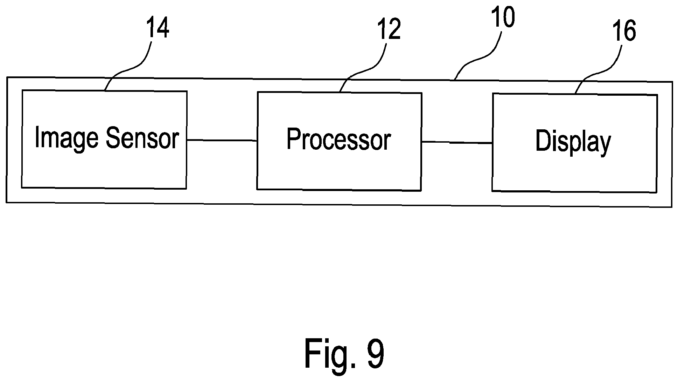

Referring now to Fig 9 showing a device 10 implementing the above described method. Preferably, the above-mentioned method is implemented in a processor 12, such as an image signal processor (ISP), an application-specific integrated circuit (ASIC), and Field Programmable Gate Array (FPGA), a general-purpose processor or a graphical processor. Further, the method can be hardware implemented or software implemented. Preferably, the Processor 10 is connected to an image sensor 14. The image sensor 14 can be a CCD-sensor a camera or the like. By the image sensor 14 initial image data can be acquired. This initial image data from the image sensor 14 is transmitted to the processor 12 to be processes according to the present invention. Preferably, the processor is further connected to a display 16 to display the final image.

The device 10 can be implemented by any kind of terminal, such as digital camera, smartphone, tablet, laptop or computer or the like. Further, although in Fig. 9 image sensor 14, processor 12, and display 16 are indicated to be implemented in one device 10, the individual modules can be implemented in more than one device. Thus, the image sensor 14 can be implemented for example in a smartphone for taking pictures. The initial image data acquired by the image sensor 14 then might be transmitted to a server or any other computational device by a communication connection. The server or other computational device may comprise the processor 12 to carry out the method according to the present invention. Then, the final image may be transmitted to a smartphone, tablet or any other device comprising a display 16 in order to display the final image. Therein, the final image from the server or other computational device may be transmitted to the same device that acquired the initial image data or another device. Preferably, the final image might be stored preferably in a cloud storage or any other storage device and afterwards delivered on demand to the display device to display the final image.

**Claims**

1. Method for image processing comprising the steps of acquiring (S01) initial image data, preferably from an image sensor;

   deconstructing (S02) the image data in a plurality of N image pyramid layers, wherein N>2;
   collapsing (S031) the N-layer with the (N-1)-layer in order to create an intermediate layer;
   collapsing (S033) the intermediate layer with the subsequent layer to create a new intermediate layer and repeating this step until collapsing the last intermediate layer with the first layer to generate the final image;
   wherein a tone-mapping operator is applied (S032, S034) to at least one intermediate layer.

2. Method according to claim 1, **characterized in that** the tone-mapping operator is applied to each of the intermediate layers and/or each of the plurality of N image pyramid layers.

3. Method according to claim 1 or 2, **characterized in that** the tone-mapping operator is applied locally to sub-areas of the respective intermediate layer and/or the respective image pyramid layer.

4. Method according to claim 1 or 3, **characterized in that** tone-mapping operator is applied globally to the complete respective intermediate layer.

5. Method according to any of claims 1 to 4, **characterized in that** a tone-mapping operator is applied to the final image and/or the image data and/or (k=N)-layer.

6. Method according to any of claims 1 to 5, **characterized in that** collapsing is performed by

$$\mathrm{IMG}_k(i,j) = \mathrm{UPSCALE}\big(\mathrm{IMG}_{k+1}(i,j)\big) + L_k(i,j),$$

with $k = N - 1, ...,1$ and

$$\mathrm{IMG}_k(i,j) = L_k(i,j)$$

for the N-layer,
wherein $L_k(i,j)$ being the image pyramid layer of the k-layer, UPSCALE a resolution adaption function between the (k+1)-layer and the k-layer, $\mathrm{IMG}_k(i,j)$ being the respective intermediate layer and $\mathrm{IMG}_{k=1}$ being the final image.

7. Method according to claim 6, **characterized in that** the tone-mapping operator is applied according to

$$\mathrm{IMG}_k(i,j) = \mathrm{ToneMapping}\big(\mathrm{IMG}_k(i,j)\big)$$

and/or

$$L_k(i,j) = \mathrm{ToneMapping}\big(L_k(i,j)\big).$$

8. Method according to any of claims 1 to 7, characterized that the image data is deconstructed into a Laplacian-Pyramid, wherein preferably the (k=1)-layer is a Laplacian-filtered image with reduced resolution of the image data and the subsequent layers are Laplacian-filtered images of the previous layer with reduced resolution.

9. Method according to any of claims 1 to 8, **characterized in that** the tone-mapping operator is implemented as brightness manipulation.

10. Method according to claim 9, **characterized in that** the brightness manipulation is implemented as one of a functional relationship, a Gamma-function, a contrast enhancing sigmoid function.

11. Method according to claims 9 or 10, **characterized in that** the brightness manipulation is determined in dependence on one or more parameter of a scene content, ambience properties, total gain of the image sensor, noise of the image sensor, histogram of brightness and user preferences.

12. Method according to any of claims 9 to 11, **characterized in that** the brightness manipulation is implemented as Look-Up-Table.

13. Method according to any of claims 1 to 12, **characterized in that** a total tone-mapping between the image data and the final image is preferably evenly distributed between tone-mapping of more than one intermediate layer.

14. Image signal processor (12), ISP, configured to carry out the steps of the method of any of claims 1 to 13.

15. Terminal device comprising an ISP according to claim 14 and an image sensor (14) connected to the ISP (12) to acquire the image data and providing the image data to the ISP.


**Patentansprüche**

1. Verfahren zur Bildverarbeitung mit den folgenden Schritten:

   Erfassen (S01) von Ausgangsbilddaten, vorzugsweise von einem Bildsensor;
   Zerlegen (S02) der Bilddaten in mehrere N Bildpyramidenebenen, wobei N>2 ist,
   Zusammenführen (S021) der N-Ebene mit der (N-1)-Ebene, um eine Zwischenebene zu erzeugen;
   Zusammenführen (S033) der Zwischenebene mit der nachfolgenden Ebene, um eine neue Zwischenebene zu erzeugen, und Wiederholen dieses Schritts, bis zum Zusammenführen der letzten Zwischenebene mit der ersten Ebene, um das endgültige Bild zu erzeugen;
   wobei ein Tone-Mapping-Operator auf mindestens eine Zwischenebene angewendet wird (S032, S034).

2. Verfahren nach Anspruch 1, **dadurch gekennzeichnet, dass** der Tone-Mapping-Operator auf jede Zwischenebene und/oder jede der N Bildpyramidenebenen angewendet wird.

3. Verfahren nach Anspruch 1 oder 2, **dadurch gekennzeichnet, dass** der Tone-Mapping-Operator lokal auf Unterbereiche der jeweiligen Zwischenebenen und/oder der jeweiligen Bildpyramidenebene angewendet wird.

4. Verfahren nach Anspruch 1 oder 3, **dadurch gekennzeichnet, dass** der Tone-Mapping-Operator global auf die jeweilige Zwischenebene angewendet wird.

5. Verfahren nach einem der Ansprüche 1 bis 4, **dadurch gekennzeichnet, dass** ein Tone-Mapping-Operator auf das endgültige Bild und/oder die Bilddaten und/oder eine (k=N)-Ebene angewendet wird.

6. Verfahren nach einem der Ansprüche 1 bis 5, **dadurch gekennzeichnet, dass** das Zusammenführen durchgeführt wird durch

$$IMG_k(i,j) = UPSCALE(IMG_{k+1}(i,j)) + L_k(i,j),$$

mit $k = N - 1,...,1$ und

$$IMG_k(i,j) = L_k(i,j)$$

für die N-Ebene,

wobei $L_k(i,j)$ die Bildpyramidenebene der k-Ebene ist, UPSCALE eine Auflösungsanpassungsfunktion zwischen der (k+1)-Ebene und der k-Ebene ist, $IMG_k(i,j)$ die jeweilige Zwischenebene ist, und $IMG_{k=1}$ das endgültige Bild ist.

7. Verfahren nach Anspruch 6, **dadurch gekennzeichnet, dass** der Tone-Mapping-Operator gemäß

$$IMG_k(i,j) = ToneMapping(IMG_k(i,j))$$

und/oder

$$L_k(i,j) = ToneMapping(L_k(i,j))$$

angewendet wird.

8. Verfahren nach einem der Ansprüche 1 bis 7, **dadurch gekennzeichnet, dass** die Bilddaten in eine Laplace-Pyramide zerlegt werden, wobei vorzugsweise die (k=1)-Ebene ein Laplace-gefiltertes Bild mit verringerter Auflösung der Bilddaten ist, und die nachfolgenden Ebenen Laplace-gefilterte Bilder der vorangehenden Ebene mit verringerter Auflösung ist.

9. Verfahren nach einem der Ansprüche 1-8, **dadurch gekennzeichnet, dass** der Tone-Mapping-Operator als Helligkeitsmanipulation implementiert wird.

10. Verfahren nach Anspruch 9, **dadurch gekennzeichnet, dass** die Helligkeitsmanipulation als eine funktionale Beziehung und/oder eine Gamma-Funktion und/oder eine Kontrastverbesserungs-Sigmoidfunktion implementiert ist.

11. Verfahren nach den Ansprüchen 9 oder 10, **dadurch gekennzeichnet, dass** die Helligkeitsmanipulation in Abhängigkeit von einem Parameter eines Szeneninhalts und/oder Umgebungseigenschaften und/oder der Gesamtverstärkung des Bildsensors und/oder dem Rauschen des Bildsensors und/oder dem Helligkeitshistogramm und/oder den Nutzerpräferenzen bestimmt wird.

12. Verfahren nach einem der Ansprüche 8 bis 11, **dadurch gekennzeichnet, dass** die Helligkeitsmanipulation als eine Look-Up-Tabelle implementiert ist.

13. Verfahren nach einem der Ansprüche 1 bis 12, **dadurch gekennzeichnet, dass** ein vollständiges Tone-Mapping zwischen den Bilddaten und dem endgültigen Bild vorzugsweise gleichmäßig auf das Tone-Mapping von mehr als einer Zwischenebene verteilt ist.

14. Bildsignalprozessor (12), ISP, der dazu ausgebildet ist, die Schritte des Verfahrens nach einem der Ansprüche 1 bis 13 auszuführen.

15. Endgerät mit einem ISP nach Anspruch 14 und einem Bildsensor (14), der mit dem ISP (12) verbunden ist, um die Bilddaten zu erfassen und die Bilddaten an den ISP zu liefern.

**Revendications**

1. Procédé destiné à un traitement d'image comprenant les étapes consistant à acquérir (S01) des données d'image initiales, de préférence à partir d'un capteur d'image ;

   déconstruire (S02) les données d'image en une pluralité de N couches de pyramide d'image, dans lequel N>2 ;
   fusionner (S031) la couche N avec la couche (N-1) afin de créer une couche intermédiaire ;
   fusionner (S033) la couche intermédiaire avec la couche suivante pour créer une nouvelle couche intermédiaire et répéter cette étape jusqu'à la fusion de la dernière couche intermédiaire avec la première couche pour générer l'image finale ;
   dans lequel un opérateur de mappage de tons est appliqué (S032, S034) à au moins une couche intermédiaire.

**2.** Procédé selon la revendication 1, **caractérisé en ce que** l'opérateur de mappage de tons est appliqué à chacune des couches intermédiaires et/ou à chacune parmi la pluralité de N couches de pyramide d'image.

**3.** Procédé selon la revendication 1 ou 2, **caractérisé en ce que** l'opérateur de mappage de tons est appliqué localement à des sous-zones de la couche intermédiaire respective et/ou de la couche de pyramide d'image respective.

**4.** Procédé selon la revendication 1 ou 3, **caractérisé en ce que** l'opérateur de mappage de tons est appliqué globalement à la couche intermédiaire respective complète.

**5.** Procédé selon l'une quelconque des revendications 1 à 4,
**caractérisé en ce qu'**un opérateur de mappage de tons est appliqué à l'image finale et/ou aux données d'image et/ou à la couche (k=N).

**6.** Procédé selon l'une quelconque des revendications 1 à 5,
**caractérisé en ce que** la fusion est mise en oeuvre par

$$IMG_k(i,j) = UPSCALE(IMG_{k+1}(i, j)) + L_k (i,j),$$

avec $k = N - 1, ...,1$ et

$$IMG_k(i,j) = L_k (i,j)$$

pour la couche N,
$L_k(i,j)$ étant la couche de pyramide d'image de la couche k, UPSCALE étant une fonction d'adaptation de résolution entre la couche (k+1) et la couche k, $IMG_k(i,j)$ étant la couche intermédiaire respective et $IMG_{k=1}$ étant l'image finale.

**7.** Procédé selon la revendication 6, **caractérisé en ce que** l'opérateur de mappage de tons est appliqué selon

$$IMG_k (i,j) = ToneMapping(IMG_k (i, j))$$

et/ou

$$L_k (i,j) = ToneMapping(L_k (i,j)).$$

**8.** Procédé selon l'une quelconque des revendications 1 à 7,
**caractérisé en ce que** les données d'image sont déconstruites en une pyramide de Laplace, de préférence la couche (k=1) étant une image à filtrage de Laplace avec une résolution réduite des données d'image et les couches suivantes étant des images à filtrage de Laplace de la couche précédente avec une résolution réduite.

**9.** Procédé selon l'une quelconque des revendications 1 à 8,
**caractérisé en ce que** l'opérateur de mappage de tons est implémenté en tant que modification de luminosité.

**10.** Procédé selon la revendication 9, **caractérisé en ce que** la modification de luminosité est implémentée en tant qu'une parmi une relation fonctionnelle, une fonction Gamma, une fonction sigmoïde de renforcement de contraste.

**11.** Procédé selon les revendications 9 ou 10, **caractérisé en ce que** la modification de luminosité est déterminée en dépendance d'un ou plusieurs paramètres parmi un contenu de scène, des propriétés d'ambiance, un gain total du capteur d'image, un bruit du capteur d'image, un histogramme de luminosité et des préférences d'utilisateur.

**12.** Procédé selon l'une quelconque des revendications 9 à 11,
**caractérisé en ce que** l'opérateur de mappage de tons est implémenté en tant que table de consultation.

**13.** Procédé selon l'une quelconque des revendications 1 à 12,
**caractérisé en ce qu'**un mappage de tons total entre les données d'image et l'image finale est de préférence distribué uniformément entre un mappage de tons de plus d'une couche intermédiaire.

14. Processeur de signal d'image (12), ISP, configuré pour effectuer les étapes du procédé selon l'une quelconque des revendications 1 à 13.

15. Dispositif terminal comprenant un ISP selon la revendication 14 et un capteur d'image (14) connectée à l'ISP (12) pour acquérir les données d'image et fournir les données d'image à l'ISP.

Input Image

Contrast Manipulated Image

Image Pyramid Construction

Image Pyramid Collapse

top layer

Manipulation

bottom layer

# Fig. 1

| Acquiring initial image data | S01 |

| Deconstructing the image data in a plurality of N image pyramid layers | S02 |

| Collapsing the (k=N)-layer with the (k=N-1)-layer in order to create an intermediate layer, wherein $k=N,...,1$; collapsing the intermediate pyramid layer with the subsequent layer to create a new intermediate layer and repeating this step until collapsing the last intermediate layer with the first (k=1)-layer to generate the final image; wherein a Tone - Mapping operator is applied to at least one intermediate layer and/or to at least one of the plurality of image pyramid layers with k=N-1,...,2 | S03 |

## Fig. 2

Acquiring initial image data | S01

Deconstructing the image data in a plurality of
N image pyramid layers | S02

Collapsing the (k=N)-layer with the
(k=N-1)-layer in order to create an intermediate layer | S031

Apply Tone - Mapping operator to the intermediate layer | S032

Collapsing the intermediate layer
with the (k=N-2)-layer in order to create
a new intermediate layer | S033

Apply Tone - Mapping operator to the new
intermediate layer | S034

Collapsing the latest intermediate layer
with the (k=1)-layer in order to create the final image | S035

Fig. 3

Fig. 4

Fig. 5

6A

6B

6C

Fig. 6

7A          7B          7C

Fig. 7

8A

8B

8C

Fig. 8

Fig. 9

**EP 3 913 573 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004101207 A

- US 2010142790 A